# EUROPEAN PATENT SPECIFICATION

(11) **EP 2 387 165 B1**
(45) Date of publication and mention of the grant of the patent: **08.10.2014**
(21) Application number: 11176784.4
(22) Date of filing: 12.08.2005
(51) Int. Cl.: H04B 7/26, H04W 4/06, H04W 72/00, H04W 28/18

(54) **Service transmission method for multimedia broadcast/multicast service**
Dienstübertragungsverfahren für Multimedia-Rundfunk-/-Multicast-Dienst
Procédé de transmission de service pour service de multidiffusion/diffusion de multimédia

(30) Priority: 12.08.2004 CN 200410056115
(43) Date of publication of application: 16.11.2011
(62) Divisional of application: 05780741.4
(73) Proprietor: Huawei Technologies Co., Ltd., Longgang District, Shenzhen Guangdong 518129 (CN)
(72) Inventor: Hu, Hao, 518129 Shenzhen (CN)
(74) Representative: Thun, Clemens

(56) References cited:
- EP-A2- 1 401 152
- WO-A1-98/25422
- WO-A1-2004/064342
- US-A1- 2004 146 041
- US-A1- 2004 152 453
- NOKIA: "System impacts of selective combining", 3GPP DRAFT; R2-040474, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Malaga, Spain; 20040212, 12 February 2004 (2004-02-12), XP050125452, [retrieved on 2004-02-12]
- "3rd Generation Partnership Project; Technical Specification Group Radio Access Network; Introduction of the Multimedia Broadcast Multicast Service (MBMS) in the Radio Access Network (RAN); Stage 2 (Release 6)", 3GPP STANDARD; 3GPP TS 25.346, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.1.0, 1 June 2004 (2004-06-01), pages 1-52, XP050368033,
- SIEMENS: "Threshold for p-t-m MBMS delivery", 3GPP DRAFT; GP-030665, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Munich; 20030404, 4 April 2003 (2003-04-04), XP050007946, [retrieved on 2003-04-04]
- SIEMENS: "On Transmission mode selection", 3GPP DRAFT; R3-040788, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20040505, 5 May 2004 (2004-05-05), XP050156556, [retrieved on 2004-05-05]
- PHILIPS: "Switching between p2p and p2m connections for MBMS", 3GPP DRAFT; R2-022629 SWITCHING BETWEEN P2P AND P2MP IN MBMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. China; 20020930, 30 September 2002 (2002-09-30), XP050122098, [retrieved on 2002-09-30]

## Description

### Field of the Technology

The invention relates to service transmission technology in general. More specifically, the invention relates to a service transmission method for Multimedia Broadcast/Multicast Service (MBMS).

### Background of the Invention

Multicast or broadcast is a technology of data transmission from a single data source to multiple destinations. In the traditional mobile networks, Cell Broadcast Service (CBS) permits the data of low bit-rate to be transferred to all the users via the shared broadcast channel of the cell. CBS is a type of message services.

At present, telephone and message services are not enough to satisfy people's demands of mobile communication. With the rapid development of the Internet, many kinds of multimedia services come forth, wherein some application services require multiple users to receive the same data at the same time, such as Video-On-Demand (VOD), telecast, video conference, network-based education and interactive video games. Compared with common data services, the mobile multimedia services have such features as large data capacity, long duration and high sensitivity to time delay. The mobile networks have specific network structure, function entities and wireless interfaces, which are very different from the cable IP networks. Therefore, the existing IP multicast technologies are only applicable to cable IP networks, but not to mobile networks.

To utilize the resources of mobile networks effectively, WCDMA/GSM International Organization for Standardization (ISO) 3GPP has put forward the concept of Multimedia Broadcast/Multicast Service (MBMS) to provide point-to-multipoint services of transmitting data from one data source to multiple users, which realizes shared utilization of network resources, improves the efficiency thereof, especially the utilization efficiency of the air interface resource. MBMS defined by 3GPP can not only realize the multicast/broadcast of plain text and low data-rate message, but also support high-speed multimedia multicast/broadcast services, which undoubtedly conforms to the development trend of the future mobile communication.

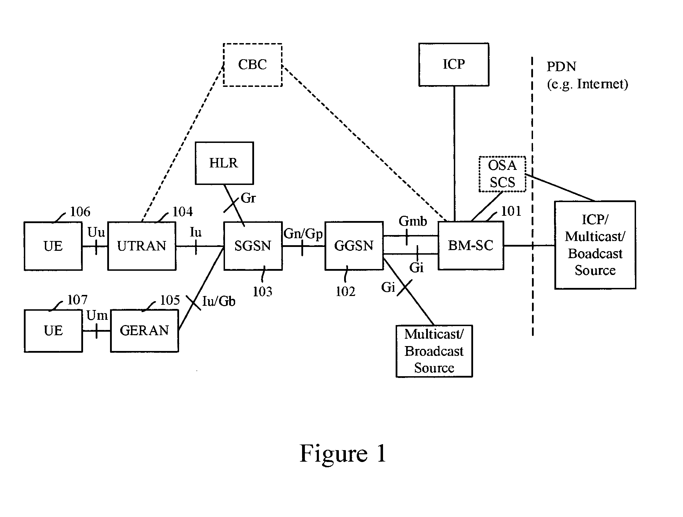

Figure 1 illustrates the wireless network architecture that supports multicast/broadcast services. As shown in figure 1, in the existing specifications of 3GPP, the wireless network entity that supports multicast/broadcast services is Broadcast/Multicast Service Center (BM-SC) 101. BM-SC 101 is connected with Gateway GPRS Support Node (GGSN) 102 through Gmb interface or Gi interface, and one BM-SC 101 can be connected with multiple GGSNs 102. GGSN 102 is connected with Serving GPRS Support Node (SGSN) 103 through Gn/Gp interface, and one GGSN 102 can be connected with multiple SGSNs 103. SGSN 103 is connected with UMTS Terrestrial Radio Access Network (UTRAN) 104 through Iu interface, and UTRAN 104 is connected with UE 106 through Uu interface. SGSN 103 may also be connected with GSM Enhanced Radio Access Network (GERAN) 105 through Iu/Gb interface, and GERAN 105 is connected with UE 107 through Um interface.

The network architecture in figure 1 shows that, to support MBMS service, the mobile network function -- Broadcast/Multicast Service Center, i.e. BM-SC, is added in 3G Mobile Communication System. The BM-SC is the entrance for Internet Content Provider (ICP), which is used for authorization and to initiate MBMS bearers on mobile networks as well as to schedule and deliver MBMS transmissions. In addition, functions related to MBMS are added to such functional entities as UE, UTRAN, GERAN, SGSN and GGSN.

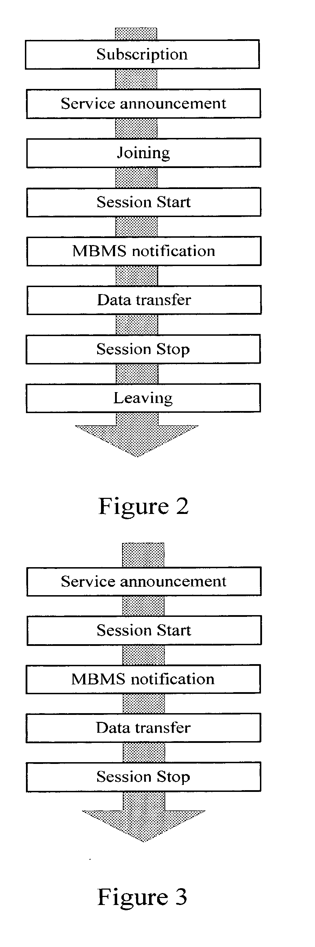

MBMS includes multicast mode and broadcast mode, wherein the multicast mode needs the users to subscribe the corresponding multicast group, activate the services and generate the relevant billing information. Different service demands of multicast mode and broadcast mode result in different procedures of respective services. Figure 2 is the flowchart of the MBMS multicast mode and figure 3 is the flowchart of MBMS broadcast mode.

As shown in figure 2, the processes related to the MBMS multicast service comprise: Subscription, Service announcement, Joining, Session Start, MBMS notification, Data transfer, Session Stop and Leaving. Subscription is used to make the users subscribe to the needed services in advance; Service announcement is a process of the BM-SC announcing the services that it can provide currently; Joining is the activation of the MBMS multicast service, through which the UE informs the network that it want to be a member of the current multicast group voluntarily and receives the multicast data of the corresponding services. In the Joining process, MBMS UE context that records the UE information is created on the network and the UE joining the multicast group. In the process of Session Start, the BM-SC gets ready to transfer the data and instructs the network to establish the bearer resources of the corresponding core network and access network. MBMS notification is used to inform UE that the MBMS multicast session is about to start. In the process of Data transfer, the BM-SC transfers the data to UE through the bearer resources established in Session Start. MBMS service has two modes for transmission between UTRAN and UE: point-to-multipoint (PTM) mode and point-to-point (PTP) mode. In the PTM mode, the same data are transferred through MBMS point-to-multipoint Traffic Channel (MTCH), and all the UE joining in multicast services or interested in broadcast services can receive the data. In the PTP mode, data are transferred in the Dedicated Channel (DTCH), and only the relevant UE can receive the data. Session Stop is used to release the bearer resource established in the process of Session Start. Leaving process makes the subscribers of the group leave this multicast group, which means the users will not receive the multicast data any more. In the Leaving process, the relevant MBMS UE context is deleted.

As shown in figure 3, the processes related to the MBMS broadcast service are similar to those of the MBMS multicast service. However, in MBMS broadcast service, Subscription and Joining processes are not needed before Session Start process, and Leaving process is not needed after Session Stop process.

As shown in figure 2, in the MBMS multicast service, the processes of Joining and Session Start are independent from each other, i.e. a user may join a multicast service before Session Start or at any time during the session after Session Start.

Generally, after the Session Start process of a certain service, the RNC will adopt an appropriate bearer mode, PTP mode or PTM mode, according to the number of the users receiving the MBMS service in one cell. In the PTP mode, a user DCH that receives the service, such as a Dedicated Physical Channel (DPCH), is used as the bearer of the MBMS traffic; while in the PTM mode, a common channel (FACH), such as a Secondary Common Control Physical Channel (SCCPCH) is used as the bearer of the MBMS traffic. The number of the users receiving the MBMS service within a cell is obtained by a Counting process.

In the existing protocols, processing of a certain MBMS service by CN and UTRAN specifically comprises:
1) In Joining process, the user instructs the networks to get ready to receive the MBMS service;
2) In MBMS Session Start process, the CN notifies the UTRAN that a certain MBMS service session is about to start, wherein the Session Start notification contains the MBMS service ID and the service attributes;
3) Having received the Session Start notification, the UTRAN initiates Counting processes in the cells that request the MBMS service to select the proper bearer mode for the MBMS service;
4) During the MBMS service session, processes of recounting users are carried out to verify whether the selected bearer mode is proper.

However, there are some disadvantages in the prior art. According to the solution in the prior art, in order to select the bearer mode for the MBMS service, Counting or Recounting process is likely to be performed at the beginning of the session or during the session of the MBMS service. Such a process of selecting the proper bearer mode by counting or recounting is very complicated and time consuming. For example, in a counting process, it has to be taken into account whether users of different states currently demand the MBMS service: For users in idle state but having the demand for the MBMS service, an RRC (Radio Resource Control) connection should be established; the idle-state users have to perform the probability detection, and initiate the random access process in Random Access Channel (RACH) if passing the detection. As a result, there will be a heavy load of signaling in the wireless channel, and blocks are likely to come forth in the upstream direction. For users in the URA-PCH (UTRAN Registration Area Paging Channel) state, on the other hand, a cell updating process is needed. Moreover, after a Counting process stops, according to the algorithm of Random Resource Management (RRM), some or all users are likely to return to the idle state or x-PCH state, such as CELL-PCH state or URA-PCH state.

In addition, counting errors during the Counting processes may result in the establishment of improper bearer mode, which means the Counting processes have not played the proper role. Moreover, to accomplish counting, the power consumption at UE will be increased during the random access process and the cell updating process performed by the idle-state users or URA-PCH-state users.

It can be seen from the above description that the system has to perform the Counting process at a relatively great cost.

Patent Application US 20040152453 A1 discloses a method to make it possible to grasp the number of terminals, which are planned to receive data of an MBMS service, accurately in an RNC even if movement of a radio terminal between RNCs occurs. In the case in which the movement of the radio terminal between RNCs has occurred during a period until the radio terminal actually received service data after it joined the MBMS service, the radio terminal notifies a moving destination RNC of at least identification information for specifying a moving source RNC. Then, the moving destination RNC notifies the RNC specified by the notified identification information that the radio terminal has left a cell.; Consequently, both the moving source RNC and the moving destination RNC become capable of accurately grasping the number of radio terminals, which receive the service, and can perform judgment on whether a PtP system or a PtM system is adopted.

Patent Application WO 1998025422 A1 discloses a method and apparatus for transmitting group messages in a packet radio network comprising at least one support node (SGSN) and a plurality of group members (MS) and at least one defined area. The support node (SGSN) knows the identity of group members (MS) in said area. The network comprises broadcast connections and point-to-point connections. The method according to the invention comprises: keeping track of the group members (MS) that have not received the group message and determining whether or not their number exceeds a predetermined threshold; in response to a positive determination in the previous step, transmitting the group message over a broadcast connection; and in response to a negative determination, transmitting the group message to the group members (MS) over a point-to-point connection.

Patent Application EP 1401152 A2 discloses a method for determining a transmission scheme for transmission of packet service data in a mobile communication system. The method detects the number of all user equipments (UEs) requesting the packet service data, located in a cell to which the UEs requesting the packet service data belong, and downlink transmission power used to provide the packet service in the cell, and determines a transmission scheme for the packet service data of the cell according to the detected number of the UEs and the detected downlink transmission power, thereby increasing efficiency of downlink transmission resources.

Nokia: "system impacts of selective combining", 3GPP DRAFT; R2-040474, 3RD GENERATION PARTNERSHIP PROJECT (3GPP), MOBILE COMPETENCE CENTRE; 650, ROUT DES LUCILES; F-06921 SOPHIA-ANTIPOLIS CEDEX; FRANCE. vol. RAN WG2, no. Malaga, Spain; 20040212, 12 February 2004 (2001-02-12), XP050125452 [retrieved on 2004-02-12] discloses a method for PTP/PTM channel selection in the CRNC.

SIEMENS: "Threshold for p-t-m MBMS delivery", 3GPP DRAFT; GP-030665, 3RD GENERATION PARTNERSHIP PROJECT (3GPP), MOBILE COMPETENCE CENTRE; 650, ROUT DES LUCILES; F-06921 SOPHIA-ANTIPOLIS CEDEX; FRANCE. vol. TSG GERAN, no. Munich; 20030404, 4 April 2003 (2003-04-04), XP050007946, [retrieved on 2003-04-04] discloses interference considerations of a p-t-m channel.

Patent Application WO 2004064342 A1 discloses a mobility method for a UE receiving a MBMS service in the state of CELL_FACH or CELL_PCH from one cell to another in RRC connected mode comprising: a step of sending a message of "Cell Update" to a new cell by the UE; a step of sending a "MBMS connection request" containing such information as a MBMS Service ID, a UE Identity and a Cell ID to a target cell by a RNC once it receives a message of "Cell Update" from the UE applying for the MBMS service and if the UE moves between different cells within the same RNC; a step of sending a message of "MBMS Channel Reconfigure" by the RNC to all UEs within the cell once the type of channel of a cell switches from PTP to PTM due to addition of the UE; a step of sending a message of "MBMS connection response" to the SRNC by the RNC; a step of sending a message of "Cell Update Affirm" to the UE by the RNC.

Patent Application US 20040146041 A1 discloses methods and system for preventing waste of radio resources in a communication system capable of providing a multimedia broadcast/multicast service. The methods and systems involve generating and broadcasting radio access capability information associated with a specific service. This information is received by one or more terminals which then use the information to determine if they have the requisite capability to receive the service. Radio bearers are established for those terminals that have the capability to receive the service.

### Summary of the Invention

The invention provides a service transmission method for MBMS and a RNC, directly adopting the PTP or PTM mode to bear MBMS service and skipping the complicated Counting process adopted by the prior art.

The service transmission method for MBMS may comprises the following steps:
defining a threshold of interference among cells in advance;
receiving, by a radio network controller, RNC, a session start instruction of an MBMS service from a core network, CN, after the MBMS service is initiated by the CN;
judging, by the RNC, whether an interference among cells in which there are users requesting the MBMS service is less than the interference threshold;
if the interference is less than the interference threshold, selecting a point-to-multipoint, PTM, mode for the cells that belong to the RNC;
if the interference is not less than the interference threshold, selecting a point-to-point, PTP, mode for the cells that belong to the RNC.

The RNC may comprise:
a first unit, configured to receive a session start instruction of an MBMS service from a core network, CN, after the MBMS service is initiated by the CN; and
a second unit, configured to judge whether an interference among cells in which there are users requesting the MBMS service is less than a pre-defined interference threshold; if the interference is less than the pre-defined interference threshold, select a point-to- multipoint, PTM, mode for the cells that belong to the RNC; and if the interference is not less than the pre-defined interference threshold, select a point-to-point, PTP, mode for the cells that belong to the RNC.

The MBMS service transmission method provided in the present invention directly selects PTM or PTP mode as a certain service bearer mode, skipping the complicated Counting/Recounting process adopted by the prior art, and reducing the signaling interaction on the wireless channels and the power consumption of the UE. More specifically, when there is less service provided in the cell or the load of the cell is not heavy, the PTM bearer mode is adopted directly without the Counting process for the MBMS services with certain characteristics, such as the MBMS services with relatively short duration. When the load of the cell is relatively heavy, however, the existing services in the system will be badly affected if the PTM bearer mode is adopted, hence the PTP bearer mode can be adopted for some or all users. In this way, impact on the existing services in the system could be the minimum while the MBMS service could be provided in the cell.

### Brief Description of the Drawings

Figure 1 illustrates the architecture of the wireless network supporting Multimedia Broadcast/ Multicast Service.
Figure 2 is the flowchart of MBMS multicast mode.
Figure 3 is the flowchart of MBMS broadcast mode.

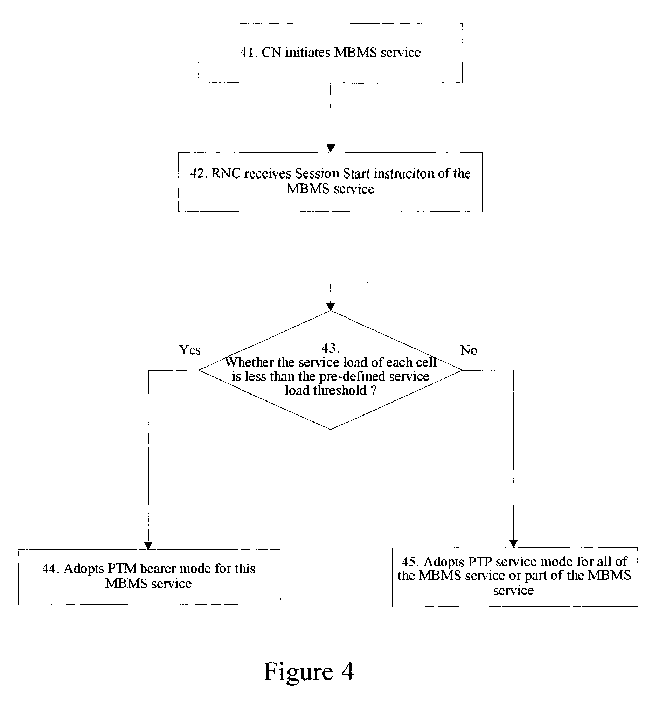

Figure 4 is the flowchart of the processing in accordance with the method of this invention.

### Embodiments of the Invention

In accordance with the method of this service transmission method for MBMS, RNC selects PTM bearer mode or PTP bearer mode for current MBMS service according to such factors as traffic load, demand for MBMS services, MBMS service characteristics, MBMS service circumstances, network load and user levels. RNC can also adopt PTM mode or PTP mode directly according to instruction from the network.

RNC selects the bearer mode for a MBMS service in each cell, respectively, and the service bearer modes selected have no impact on each other.

Embodiment 4 describes the claimed invention. The embodiments 1-3 and 5-8 do not describe the claimed invention but help to better understand the claimed invention.

### Embodiment 1:

In this embodiment, having received the Session Start instruction of a MBMS service, the RNC selects PTM bearer mode or PTP bearer mode according to the traffic load. In this embodiment, the operator defines a service load threshold of each cell in advance. As shown in figure 2, the MBMS service transmission method in accordance with this embodiment comprises the steps of:
Step 41: The CN sends to the RNC a MBMS Session Start instruction in connection with a certain MBMS service;
Steps 42∼45: Having received the Session Start instruction of the MBMS service, the RNC judges whether the service load of each cell belonging to the RNC is less than the pre-defined service load threshold. If yes, it means the service load of the corresponding cell is relatively light, then the RNC informs the users through the MBMS Service Information message that the PTM bearer mode is adopted for the MBMS service without going through a Counting process; otherwise, it means the service load thereof is relatively heavy, then the RNC judges whether the PTP bearer mode can be directly adopted in this cell according to the current actual service load. If the current actual service load indicates that the service can still be supported by the PTP bearer mode, the PTP mode is adopted; otherwise, the MBMS service is not provided.

Each cell can define identical or different service load thresholds in advance, i.e. each cell can separately selects the PTM bearer mode according to different load circumstances.

Embodiment 2:

In this embodiment, having received the Session Start instruction of the MBMS service, the RNC selects PTM bearer mode or PTP bearer mode according to the duration of the session. In this embodiment, the operator defines a duration threshold in advance. Then the steps 42-45 in this embodiment are:
Having received the Session Start instruction of the MBMS service, the RNC judges whether the session duration of this MBMS service is less than the pre-defined duration threshold. If yes, it means the session duration of the MBMS service is relatively short, then the RNC informs the users through the MBMS Service Information message that the PTM bearer mode is adopted for the MBMS service without going through a Counting process; otherwise, it means the session duration of the MBMS service is relatively long, then the RNC determines according to actual session duration whether to adopt the PTP mode directly in the cell or to provide no MBMS service.

Embodiment 3:

In this embodiment, having received the Session Start instruction of the MBMS service, the RNC selects PTM bearer mode or PTP bearer mode according to the service load and the cell ratio with MBMS service demand. In this embodiment, the operator defines a service load threshold and a cell ratio threshold. Then the steps 42-45 in this embodiment are:
Having received the Session Start instruction of the MBMS service, the RNC judges whether the number of the cells in which there are users requesting the MBMS service and the service loads are less than the pre-defined service load threshold reaches the cell ratio threshold, for example, 80%. If yes, the RNC informs the users through the MBMS Service Information message that the PTM bearer mode is adopted for the MBMS service; otherwise, the RNC judges whether the PTP bearer mode is directly adopted in this cell according to the current actual service load. If the current actual service load indicates that the service can be supported by the PTP bearer mode, then the PTP mode is adopted; otherwise, the MBMS service is not provided.

Embodiment 4:

In this embodiment, having received the Session Start instruction of the MBMS service, the RNC selects PTM bearer mode or PTP bearer mode according to the interference among the cells with demand for the MBMS service. In this embodiment, a threshold of interference among cells is defined in advance. Then the steps 42-45 in this embodiment are:
Having received the Session Start instruction of the MBMS service, the RNC judges whether the interference among the cells with demand for this MBMS service is less than the pre-defined interference threshold. If yes, it means that the interference among the cells is relatively light, then the RNC informs the users through the MBMS Service Information message that the PTM bearer mode is adopted for the MBMS service; otherwise, it means the interference among the cells is relatively heavy, and then the PTP mode is adopted to bear the MBMS service.

Here, the specific method for calculating the interference among cells can be determined by the operator itself. For example, determine the distribution of all the cells that receive the MBMS service according to the network topology, and then estimate the interference among the cells according to the distribution.

### Embodiment 5:

In this embodiment, when the CN initiates a MBMS service, the bearer mode of this MBMS service is designated at the same time, which is carried by the Session Start instruction of the MBMS service. Thus, after the RNC receives a certain MBMS service initiated by the CN, the designated bearer mode is directly adopted to bear the MBMS service for all the users of the cell.

### Embodiment 6:

In this embodiment, store in the RNC in advance the corresponding relationship between types of MBMS services and bearer modes. The operator can determine the one-to-one relationship between types of MBMS services and bearer modes in advance. Having received a certain MBMS service initiated by the CN, the RNC finds the bearer mode according to the pre-stored corresponding relationship and the type of the current MBMS service, and then the MBMS service is transferred to all the users of the cell through the bearer mode determined according to the corresponding relationship.

### Embodiment 7:

In this embodiment, whether the PTM mode or PTP mode is selected is decided according to the user levels. More specifically, the users are divided into different levels, and all the user levels for receiving MBMS services are stored in the network. Furthermore, it is determined in advance that the PTP mode is used to bearer services for the users whose levels are higher than or equal to a certain level and PTM mode is adopted for the users whose levels are lower than this level. The corresponding relationship between different user levels and bearer modes can also be determined in advance. Thus, after receiving a certain MBMS service initiated by the CN, the RNC selects the corresponding bearer mode according to the user level.

### Embodiment 8:

If the network load is extraordinarily heavy, and when the RNC can not adopt the PTM mode after receiving a certain MBMS service initiated by the CN, then the number of the users requesting the MBMS service in the cell can be obtained through the Counting process. If the current load of the cell permits the provision of the service in the PTP mode for all the users, the PTP bearer will be created; if the current load of the cell permits the provision of the service in the PTP mode for some of the users, then the PTP bearer will be created only for the high-level users; if no bearer can indeed be created in the cell for this MBMS service, the MBMS service will not be provided. The high-level user means the user with relatively high priority when the networks provide services.

Here, whether the load is heavy or light is usually decided by operators according to actual conditions of their own. For example, for operator A, if he requires relatively high QoS (quality of service), the network load higher than 60% may be regarded as heavy; while for operator B, if he requires relatively low QoS, maybe the network load higher than 80% is regarded as heavy.

The foregoing description is only preferred embodiments of this invention and is not used to limit the protection scope of the invention.

## Claims

1. A service transmission method for a multimedia broadcast/multicast service, MBMS service, comprising:
defining a threshold of interference among cells in advance;
receiving, by a radio network controller, RNC, a session start instruction of an MBMS service from a core network, CN, after the MBMS service is initiated by the CN;
judging, by the RNC, whether an interference among cells in which there are users requesting the MBMS service is less than the interference threshold;
if the interference is less than the interference threshold, selecting a point-to-multipoint, PTM, mode for the cells that belong to the RNC;
if the interference is not less than the interference threshold, selecting a point-to-point, PTP, mode for the cells that belong to the RNC.

2. A radio network controller, RNC, comprising:
a first unit, configured to receive a session start instruction of an MBMS service from a core network, CN, after the MBMS service is initiated by the CN; and
a second unit, configured to judge whether an interference among cells in which there are users requesting the MBMS service is less than a pre-defined interference threshold; if the interference is less than the pre-defined interference threshold, select a point-to- multipoint, PTM, mode for the cells that belong to the RNC; and if the interference is not less than the pre-defined interference threshold, select a point-to-point, PTP, mode for the cells that belong to the RNC.

## Patentansprüche

1. Dienstübertragungsverfahren für einen "Multimedia Broadcast/Multicast Service"-Dienst, MBMS-Dienst, umfassend:
Definieren einer Schwelle von Störungen zwischen Zellen im Voraus;
Empfangen einer Sitzungsstartanweisung eines MBMS-Dienstes durch eine Funknetzsteuerung (radio network controller, RNC) von einem Kernnetz (core network, CN), nachdem der MBMS-Dienst durch das CN eingeleitet wird,
Beurteilen durch die RNC, ob eine Störung zwischen Zellen, in denen es Benutzer gibt, die den MBMS-Dienst anfordern, kleiner als die Störungsschwelle ist,
wenn die Störung kleiner als die Störungsquelle ist, Auswählen eines Punkt-zu-Mehrpunkt-Modus (point-to-multipoint mode, PTM-Modus) für die Zellen, die zu der RNC gehören;
wenn die Störung nicht kleiner als die Störungsschwelle ist, Auswählen eines Punkt-zu-Punkt-Modus (point-to-point mode, PTP-Modus) für die Zellen, die zu der RNC gehören.

2. Funknetzsteuerung, RNC, umfassend:
eine erste Einheit, ausgelegt zum Empfangen einer Sitzungsstartanweisung eines MBMS-Dienstes von einem Kernnetz, CN, nachdem der MBMS-Dienst durch das CN eingeleitet wird; und
eine zweite Einheit, ausgelegt zum Beurteilen, ob eine Störung zwischen Zellen, in denen es Benutzer gibt, die den MBMS-Dienst anfordern, kleiner als eine im Voraus definierte Störungsschwelle ist; wenn die Störung kleiner als die im Voraus definierte Störungsschwelle ist, Auswählen eines Punkt-zu-Mehrpunkt-Modus, PTM-Modus,
für die Zellen, die zu der RNC gehören; wenn die Störung nicht kleiner als die Störungsschwelle ist, Auswählen eines Punkt-zu-Punkt-Modus, PTP-Modus, für die Zellen, die zu der RNC gehören.

## Revendications

1. Procédé de transmission de service pour un service de diffusion/multidiffusion multimédia, soit service MBMS, comprenant :
la définition préalable d'un seuil d'interférence parmi les cellules ;
la réception, par un contrôleur de réseau radio, RNC, d'une instruction de lancement de session d'un service MBMS depuis un réseau coeur, CN, après le lancement du service MBMS par le CN ;
le jugement, par le RNC, que l'interférence parmi les cellules dans lesquelles se trouvent des utilisateurs requérant le service MBMS est ou non inférieure au seuil d'interférence ;
si l'interférence est inférieure au seuil d'interférence, la sélection d'un mode point-multipoint, PTM, pour les cellules qui appartiennent au RNC ;
si l'interférence n'est pas inférieure au seuil d'interférence, la sélection d'un mode point-point, PTP, pour les cellules qui appartiennent au RNC.

2. Contrôleur de réseau radio, RNC, comprenant :
une première unité, configurée pour recevoir une instruction de lancement de session d'un service MBMS depuis un réseau coeur, CN après le lancement du service MBMS par le CN ; et
une seconde unité, configurée pour juger que l'interférence parmi les cellules dans lesquelles se trouvent des utilisateurs requérant le service MBMS est ou non inférieure à un seuil d'interférence prédé fini, si l'interférence est inférieure au seuil d'interférence prédé fini, sélectionner un mode point-multipoint, PTM, pour les cellules qui appartiennent au RNC ; et si l'interférence n'est pas inférieure au seuil d'interférence prédé fini, sélectionner un mode point-point, PTP, pour les cellules qui appartiennent au RNC.
